# EUROPEAN PATENT SPECIFICATION

(11) **EP 2 644 887 B1**
(45) Date of publication and mention of the grant of the patent: **22.03.2023**
(21) Application number: 13161166.7
(22) Date of filing: 26.03.2013
(51) Int. Cl.: F03D 7/02

(54) **A WIND TURBINE WITH ROTOR-STALL PREVENTION**
EINE WINDKRAFTANLAGE MIT ROTOR-STALL-VERHINDERUNG
UNE ÉOLIENNE AVEC PRÉVENTION DU DÉCROCHAGE DU ROTOR

(30) Priority: 27.03.2012 US 201213430930
(43) Date of publication of application: 02.10.2013
(73) Proprietor: General Electric Company, Schenectady, NY 12345 (US)
(72) Inventor: Kammer, Leonardo Cesar, Niskayuna, NY New York 12309 (US)
(74) Representative: Zimmermann & Partner Patentanwälte mbB

(56) References cited:
- EP-A2- 1 918 581
- EP-A2- 2 075 462
- WO-A2-2011/150931
- US-A1- 2008 101 916
- US-A1- 2010 098 540

## Description

The subject matter of this disclosure relates generally to wind turbines, and more particularly to a system and method that utilizes wind turbine models and estimated states to maintain continuous operation of a wind turbine without transitions to a detrimental stalled mode.

Over the last decade, wind turbines have received increased attention as environmentally safe and relatively inexpensive alternative energy sources. With this growing interest, considerable efforts have been made to develop wind turbines that are reliable and efficient.

Generally, a wind turbine includes a rotor having multiple blades. The rotor is mounted to a housing or nacelle, which is positioned on top of a tubular tower. Utility grade wind turbines (i.e., wind turbines designed to provide electrical power to a utility grid) can have large rotors (e.g., 50 or more meters in length). In addition, the wind turbines are typically mounted on towers that are at least 80 meters in height. Blades on these rotors transform wind energy into a rotational torque or force that drives one or more generators that may be rotationally coupled to the rotor through a gearbox. The gearbox steps up the inherently low rotational speed of the turbine rotor for the generator to efficiently convert mechanical energy to electrical energy, which is fed into a utility grid. See, for example, WO 2011/150931, EP 1 918 581, US2010/0098540 and EP 2 075 462. Wind turbine blades have continually increased in size in order to increase energy capture. However, as blades have increased in size, it has become increasingly more difficult to control optimum energy capture. The blade loading is dependent on the wind speed, tip speed ratio (TSR) and/or pitch setting of the blade. TSR is the ratio of the rotational velocity of the blade tip to wind speed. It is important to optimize the operation of the wind turbine, including blade energy capture, to reduce the cost of the energy produced. Pitch setting of the blades (i.e. the angle of attack of the airfoil shaped blade), provides one of the parameters utilized in wind turbine control. Typically, controllers are configured to provide adjustment of rotor speed (i.e., the rotational speed of the hub around which the blades rotate) by adjusting the blade pitch in a manner that provides increased or decreased energy transfer from the wind, which accordingly is expected to adjust the rotor speed.

Wind turbines with sophisticated control systems maintain constant speed and power by active blade pitch control. Power production for a wind turbine is negatively impacted if the blades of the wind turbine operate in a non- optimal state. In addition, low air density or a drop in air density may also result in a loss of energy transfer from the wind to the blades.

Aerodynamic stall causes a decrease in lift and an increase in drag coefficients for a wind turbine blade. The onset of stall is signaled by a sharp change in a wind turbine's performance evident by degradation in output power versus expected power. More specifically, the rotor is said to be stalled if any increase in wind speed reduces the thrust on the rotor. In the event of aerodynamic stall, the energy transfer from the wind is reduced precipitously. Power degradation resulting from the loss of energy transfer is most significant during periods of rated winds where full power output is anticipated by the controller. That is, the control system interprets the decrease in power as a need for increased rotor torque. The control system reacts by calling for a decrease in blade pitch, which increases the angle of attack in an effort to increase the energy transfer from the wind. The increasing the angle of attack by the control system of an aerodynamically stalled blade further increases the flow separation, increasing the stall condition and further decreasing the energy transfer from the wind. As such, the current systems fail to address conditions, such as low density air operation that may cause aerodynamic stalling.

Therefore, what is needed is a method for operating a wind turbine that maintains the blade pitch angle at an angle greater than or equal to a calculated minimum pitch angle for a large variety of wind turbine and wind conditions to avoid having the wind turbine rotor enter a stall condition.

Hence, the present invention, as defined by the appended claims, is provided.

Various features, aspects and advantages of the invention are apparent from the following detailed description taken in conjunction with the accompanying drawings in which like characters represent like parts throughout the drawings, wherein:
Figure 1 is an illustration of an exemplary configuration of a wind turbine;
Figure 2 is a cut-away perspective view of a nacelle of the exemplary wind turbine configuration shown in Figure 1;
Figure 3 is a block diagram of an exemplary configuration is a block diagram of an exemplary configuration of a control system for the wind turbine configuration shown in Figure 1;
Figure 4 is a process flow diagram of an exemplary method according to an embodiment of the present disclosure; and
Figure 5 illustrates a typical aerodynamic map of the torque coefficient, Cm, as a function of the tip-speed ratio and blade pitch angle for a wind turbine blade.

While the above-identified drawing figures set forth alternative embodiments, other embodiments of the present invention are also contemplated, as noted in the discussion. In all cases, this disclosure presents illustrated embodiments of the present invention by way of representation and not limitation. Numerous other modifications and embodiments can be devised by those skilled in the art which fall within the scope and spirit of the principles of this invention.

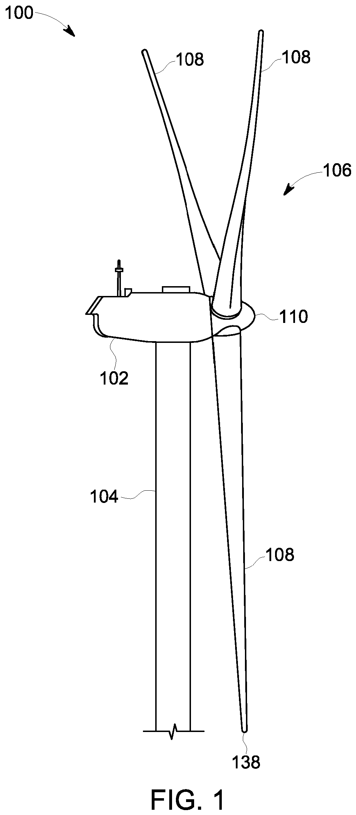

Referring to Figure 1, an exemplary wind turbine 100 according to one embodiment of the present invention is disclosed. The wind turbine 100 includes a nacelle 102 mounted atop a tall tower 104, only a portion of which is shown in Figure 1. Wind turbine 100 also comprises a wind turbine rotor 106 that includes one or more rotor blades 108 attached to a rotating hub 110. Although wind turbine 100 illustrated in Figure 1 includes three rotor blades 108, there are no specific limits on the number of rotor blades 108 required by the embodiments described herein. The height of tower 104 is selected based upon factors and conditions known in the art.

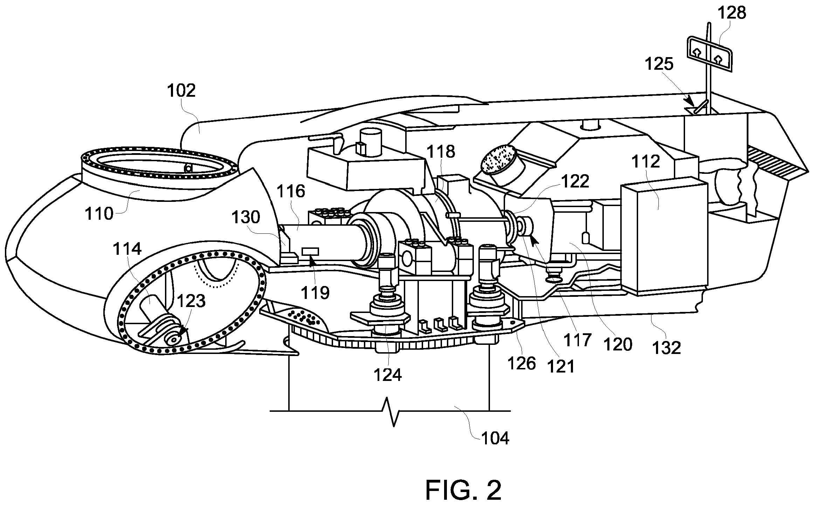

In some configurations and referring to Figure 2, various components are housed in nacelle 102 atop tower 104. One or more microcontrollers or other control components are housed within a control panel 112. The microcontrollers include hardware and software configured and programmed to provide a control system providing overall system monitoring and control, including without limitation, pitch and speed regulation, high-speed shaft and yaw brake application, yaw and pump motor application and fault monitoring. In alternative embodiments of the disclosure, the control system may be a distributed control architecture not solely provided for by the control panel 112 as would be appreciated by one of ordinary skill in the art. The control system provides control signals to a variable blade pitch drive 114 according to modeled aerodynamic performance of the rotor blades to control the pitch of blades 108 (Figure 1) that drive hub 110 as a result of wind. In some configurations, the pitches of blades 108 are individually controlled by blade pitch drive 114.

The drive train of the wind turbine 100 includes a main rotor shaft 116 (also referred to as a "low speed shaft") connected to hub 110 and supported by a main bearing 130 and, at an opposite end of shaft 116, to a gear box 118. The speed of rotation of the main rotor shaft 116 or rotor speed may be measured by suitable instrumentation or measurement devices. In some configurations, hub rotational speed is known from an encoder 117 on a high speed shaft connected to the aft end of a generator 120. In addition, the rotor speed may be determined from a proximity switch 119 on the high or low speed shaft. In addition, the rotor speed may be directly measured with sensing devices, such as optical strobing detection of a labeled high or low speed shaft. The rotor speed information may be provided to the control system along with other current turbine conditions. Gear box 118, in some configurations, utilizes a dual path geometry to drive a high speed shaft 121. The high speed shaft 121 is used to drive generator 120, which is mounted on main frame 132. In some configurations, rotor torque is transmitted via coupling 122. Generator 120 may be of any suitable type, for example, a wound rotor induction generator.

Yaw drive 124 and yaw deck 126 provide a yaw orientation system for wind turbine 100. According to one embodiment, anemometry provides information for the yaw orientation system, including measured instantaneous wind direction and wind speed at the wind turbine. Anemometry may be based on a wind vane 128. The anemometry information, including without limitation, wind force, wind speed and wind direction, may be provided to the control system to provide inputs for determination of effective wind speed, among other things. In some configurations, the yaw system is mounted on a flange provided atop tower 104.

In addition to rotor speed sensor(s) and wind speed sensors such as described herein, turbine power sensors may be employed to provide the electrical power output level, pitch angle sensors 123 may be employed to provide individual and collective blade pitch angles, and temperature sensors 125 may be employed to provide ambient temperature. The resultant generator speed, electrical power, blade pitch angle(s) and current ambient temperature information may be provided to the control system in similar fashion to the rotor speed and wind speed information described herein.

A preferred method for estimation of wind speed according to one embodiment requires measurements of electrical power, generator speed, blade pitch angles, and ambient temperature. Measurement of ambient temperature is employed according to one aspect for calculation/estimation of air density, which may alternatively be measured directly via more expensive sensors.

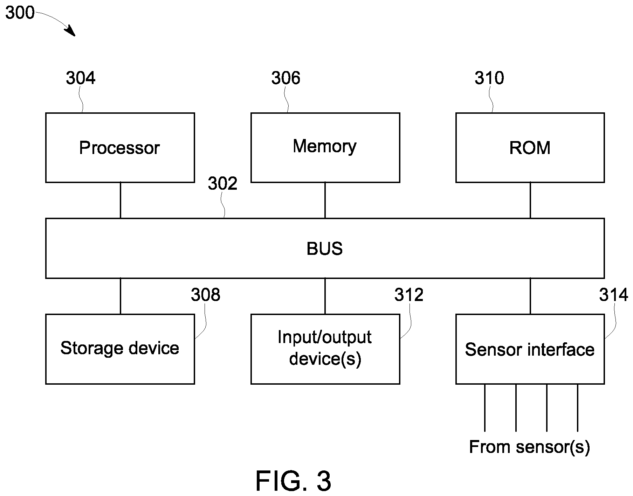

In some configurations and referring to Figure 3, an exemplary control system 300 for wind turbine 100 includes a bus 302 or other communications device to communicate information. Processor(s) 304 are coupled to bus 302 to process information, including information from sensors identified herein to measure rotor/generator speed, electrical power, blade pitch angles, ambient temperature, and effective wind speed. Control system 300 further includes random access memory (RAM) 306 and/or other data storage device(s) 308. RAM 306 and data storage device(s) 308 are coupled to bus 302 to store and transfer information and instructions to be executed by processor(s) 304. RAM 306 (and also data storage device(s) 308, if required) can also be used to store temporary variables or other intermediate information during execution of instructions by processor(s) 304. Control system 300 may also include read only memory (ROM) and or other static storage device (s) 310, which is coupled to bus 302 to store and provide static (i.e., non- changing) information and instructions to processor(s) 304. Input/output device(s) 312 can include any device known in the art to provide input data to control system 300 and to provide predetermined control outputs. Instructions are provided to memory from a storage device, such as magnetic disk, a read-only memory (ROM) integrated circuit, CD-ROM, DVD, via a remote connection that is either wired or wireless providing access to one or more electronicallyaccessible media, etc. In some embodiments, hard-wired circuitry can be used in place of or in combination with software instructions. Thus, execution of sequences of instructions is not limited to any specific combination of hardware circuitry and software instructions.

Sensor interface 314 is an interface that allows control system 300 to communicate with one or more sensors such as described herein. Sensor interface 314 can be or can comprise, for example, one or more analog-to-digital converters that convert analog signals into digital signals that can be used by processor(s) 304. In one embodiment, the sensor interface includes signals from a rotor speed determining device, anemometry from wind vane 128, electrical power sensor(s), blade pitch angle sensor(s), and ambient temperature sensor(s).

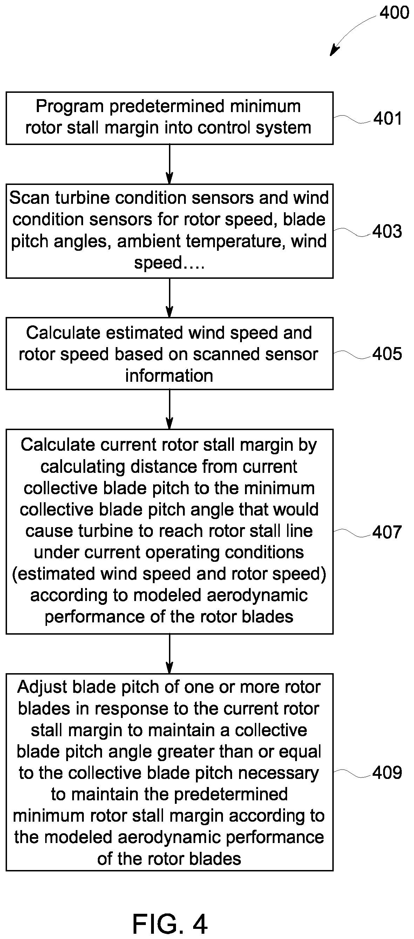

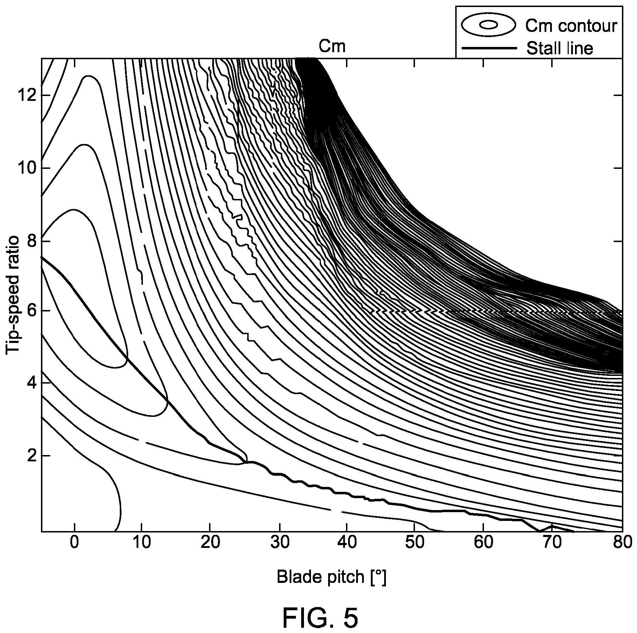

A method for operating a wind turbine 100 is illustrated according to one embodiment in the process flow diagram 400 shown in Figure 4. The embodied method assumes that the blades 108 behave according to models, which posit blade efficiency has not been compromised, to estimate the wind speed. According to one embodiment, operational control commences by programming a predetermined minimum rotor stall margin into the control system 300, as represented in step 401. According to one aspect, the rotor is said to be stalled if any increase in wind speed reduces the thrust on the rotor. According to a preferred embodiment, the rotor is said to be stalled if a decrease in the rotor speed causes a decrease in the aerodynamic torque produced by the rotor. Figure 5 illustrates a typical aerodynamic map of the torque coefficient, Cm, as a function of tip-speed ratio and blade pitch angle according to one embodiment. The calculation of the minimum blade angle, based on such curves, requires knowledge of the tip-speed ratio, that is, of the rotor speed and the wind speed. Rotor speed, as described herein, can be calculated from the measurement of generator speed. The wind speed can be estimated, measured n a single location and later time averaged, or measured spatially with a Lidar or Sodar instrument.

With continued reference to Figure 4, turbine condition sensors such as described herein are scanned via the control system sensor interface 314 to provide without limitation, current rotor/generator speed information, current electrical output power, current blade pitch angles, and current ambient temperature as represented in step 403.

Further, current effective wind speed is estimated via the control system 300 in response to wind condition sensor readings as represented in step 405.

Using the current estimated wind speed and rotor speed based on the information provided in steps 403 and 405, the current rotor stall margin is determined via control system 300 by calculating the distance from the current collective blade pitch to the minimum collective blade pitch angle that would cause the turbine to reach the rotor stall line according to modeled aerodynamic performance of the rotor blades under the current operating conditions, as represented in step 407.

If necessary, the control system may adjust the blade pitch of one or more rotor blades 108 in response to the minimum collective blade pitch angle determined in step 407 to provide a collective blade pitch angle greater than or equal to the collective blade pitch necessary to maintain the predetermined minimum rotor stall margin according to the modeled aerodynamic performance of the rotor blades, as represented in step 409.

While the above has been described as determining the wind speed and the rotor speed directly from the corresponding systems or instruments, the wind speed and rotor speed may be provided from other locations or systems, such as weather monitoring stations, weather predicators, from a wind plant central monitoring/control, from predicted weather conditions, from externally mounted monitoring devices, from instruments mounted on other areas of the wind turbine or elsewhere in the wind turbine plant, such as directly on the blades, or by other methods or systems suitable for providing wind speed and/or rotor speed and/or other parameters suitable for calculating tip speed ratios.

Operation of the collective blade pitch angle at angles equal to or above the minimum blade pitch determined in step 409 provides operation that reduces or eliminates aerodynamic stall conditions resulting from, without limitation, low density air operation conditions susceptible to aerodynamic stalling.

The invention is defined by the appended set of claims.

## Claims

1. A wind turbine (100) comprising:
at least one rotor blade (108) having an adjustable pitch angle;
one or more turbine sensors (117,119,123,125,128); and
a control system (112) programmed to adjust a blade pitch angle of one or more rotor blades, according to modeled aerodynamic performance of the rotor blades (108), wherein the control system (112) is further configured to:
receive information from the turbine sensors (117.... 128) to provide current conditions experienced by the wind turbine (100);
determine a current rotor stall margin by calculating a distance from a current collective blade pitch angle to a minimum collective blade pitch angle that would cause the wind turbine (100) to reach a rotor stall line according to the modelled aerodynamic performance under said current conditions; and
adjust the blade pitch angle in response to the current rotor stall margin to provide a blade pitch angle that is greater than or equal to a blade pitch angle necessary to maintain a predetermined minimum rotor stall margin such that continuous operation of the wind turbine (100) is maintained without transitions to the stalled mode;
and wherein the predetermined minimum rotor stall margin is based on a coefficient of torque curve as a function of rotor blade tip-speed ratio and rotor blade pitch angle, a coefficient of thrust curve as a function of rotor blade tip-speed ratio and rotor blade pitch angle, or a combination thereof.

2. The wind turbine (100) according to claim 1, wherein the current conditions experienced by the wind turbine comprise estimated wind speed and rotor speed.

3. The wind turbine (100) according to any preceding claim, wherein the current conditions experienced by the wind turbine comprise measured wind speed and rotor speed.

4. The wind turbine (100) according to any preceding claim, wherein the one or more turbine sensors comprise at least one rotor speed sensor (117,119), at least one blade pitch angle sensor (123), at least one electrical power sensor, and at least one ambient temperature sensor (125).

5. The wind turbine (100) according to any preceding claim, wherein the one or more turbine sensors comprise one or more wind speed sensors (128), and one or more rotor speed sensors (117,119).

## Patentansprüche

1. Windkraftanlage (100) umfassend:
mindestens ein Rotorblatt (108) mit einem einstellbaren Anstellwinkel;
einen oder mehrere Turbinensensoren (117, 119, 123, 125, 128); und
ein Steuersystem (112), das so programmiert ist, dass es einen Blattanstellwinkel von einem oder mehreren Rotorblättern gemäß der modellierten aerodynamischen Leistung der Rotorblätter (108) einstellt, wobei das Steuersystem (112) ferner konfiguriert ist um:
Informationen von den Turbinensensoren (117...128) zu empfangen, um aktuelle Bedingungen bereitzustellen, die von der Windkraftanlage (100) erfahren werden;
Bestimmen einer aktuellen Rotorstillstandsspanne durch Berechnen eines Abstands von einem aktuellen kollektiven Blattanstellwinkel zu einem minimalen kollektiven Blattanstellwinkel, der die Windkraftanlage (100) veranlassen würde, eine Rotorstillstandslinie gemäß der modellierten aerodynamischen Leistung unter den aktuellen Bedingungen zu erreichen; und
Einstellen des Blattanstellwinkels in Abhängigkeit von der aktuellen Rotorstillstandsspanne, um einen Blattanstellwinkel bereitzustellen, der größer oder gleich einem Blattanstellwinkel ist, der notwendig ist, um eine vorbestimmte minimale Rotorstillstandspanne aufrechtzuerhalten, so dass ein kontinuierlicher Betrieb der Windkraftanlage (100) ohne Übergänge in den Stillstandmodus aufrechterhalten wird;
und wobei die vorbestimmte minimale Rotorstillstandsspanne auf einem Koeffizienten der Drehmomentkurve als Funktion des Rotorblatt-Spitzengeschwindigkeitsverhältnisses und des Rotorblattanstellwinkels, einem Koeffizienten der Schubkurve als Funktion des Rotorblatt-Spitzengeschwindigkeitsverhältnisses und des Rotorblattanstellwinkels, oder einer Kombination davon basiert.

2. Windkraftanlage (100) nach Anspruch 1, wobei die von der Windkraftanlage erfahrenen aktuellen Bedingungen eine geschätzte Windgeschwindigkeit und Rotordrehzahl umfassen.

3. Windkraftanlage (100) nach einem der vorhergehenden Ansprüche, wobei die aktuellen Bedingungen, die die Windkraftanlage erfährt, eine gemessene Windgeschwindigkeit und Rotordrehzahl umfassen.

4. Windkraftanlage (100) nach einem der vorhergehenden Ansprüche, wobei der eine oder die mehreren Turbinensensoren mindestens einen Rotordrehzahlsensor (117, 119), mindestens einen Blattanstellwinkelsensor (123), mindestens einen elektrischen Leistungssensor und mindestens einen Umgebungstemperatursensor (125) umfassen.

5. Windkraftanlage (100) nach einem der vorhergehenden Ansprüche, wobei der eine oder die mehreren Turbinensensoren einen oder mehrere Windgeschwindigkeitssensoren (128) und einen oder mehrere Rotordrehzahlsensoren (117, 119) umfassen.

## Revendications

1. Turbine éolienne (100) comprenant :
au moins une pale de rotor (108) ayant un angle de pas ajustable ;
un ou plusieurs capteurs de turbine (117, 119, 123, 125, 128) ; et
un système de commande (112) programmé pour ajuster un angle de pas de pale d'une ou plusieurs pales de rotor, selon une performance aérodynamique modélisée des pales de rotor (108), dans laquelle le système de commande (112) est configuré en outre pour :
recevoir des informations provenant des capteurs de turbine (117.... 128) pour fournir des conditions actuelles subies par la turbine éolienne (100) ;
déterminer une marge actuelle de décrochage de rotor en calculant une distance allant d'un angle collectif actuel de pas de pale à un angle collectif minimal de pas de pale qui amènerait la turbine éolienne (100) à atteindre une ligne de décrochage de rotor selon la performance aérodynamique modélisée dans lesdites conditions actuelles ; et
ajuster l'angle de pas de pale en réponse à la marge actuelle de décrochage de rotor pour fournir un angle de pas de pale qui est supérieur ou égal à l'angle de pas de pale nécessaire pour maintenir une marge minimale prédéterminée de décrochage de rotor de sorte qu'un fonctionnement continu de la turbine éolienne (100) est maintenu sans transition vers le mode en décrochage ;
et dans laquelle la marge minimale prédéterminée de décrochage de rotor est basée sur un coefficient de courbe de couple en fonction d'un rapport de vitesse périphérique de pale de rotor et d'un angle de pas de pale de rotor, un coefficient de courbe de poussée en fonction d'un rapport de vitesse périphérique de pale de rotor et d'un angle de pas de pale de rotor, ou une combinaison de ceux-ci.

2. Turbine éolienne (100) selon la revendication 1, dans laquelle les conditions actuelles subies par la turbine éolienne comprennent une vitesse de vent et une vitesse de rotor estimées.

3. Turbine éolienne (100) selon l'une quelconque revendication précédente, dans laquelle les conditions actuelles subies par la turbine éolienne comprennent une vitesse de vent et une vitesse de rotor mesurées.

4. Turbine éolienne (100) selon l'une quelconque revendication précédente, dans laquelle le ou les capteurs de turbine comprennent au moins un capteur de vitesse de rotor (117, 119), au moins un capteur d'angle de pas de pale (123), au moins un capteur de puissance électrique, et au moins un capteur de température ambiante (125).

5. Turbine éolienne (100) selon l'une quelconque revendication précédente, dans laquelle le ou les capteurs de turbine comprennent un ou plusieurs capteurs de vitesse de vent (128), et un ou plusieurs capteurs de vitesse de rotor (117, 119).
